# EUROPÄISCHE PATENTSCHRIFT

(11) **EP 1 705 399 B1**
(45) Veröffentlichungstag und Bekanntmachung des Hinweises auf die Patenterteilung: **26.11.2008**
(21) Anmeldenummer: 05006118.3
(22) Anmeldetag: 21.03.2005
(51) Int. Cl.: F16F 13/10

(54) **Hydrolager**
Hydraulic support
Support hydraulique

(43) Veröffentlichungstag der Anmeldung: 27.09.2006
(60) Teilanmeldung: 08004543.8
(73) Patentinhaber: Carl Freudenberg KG, 69469 Weinheim (DE)
(72) Erfinder: Hirsch, Volker, Dr., 67346 Speyer (DE); Schmook, David, 69469 Weinheim (DE); Weiß, Lydia, 69168 Wiesloch (DE); Erl, Andreas, 16761 Hennigsdorf (DE)

(56) Entgegenhaltungen:
- US-A- 4 753 421
- PATENT ABSTRACTS OF JAPAN Bd. 017, Nr. 282 (M-1420), 31. Mai 1993 (1993-05-31) & JP 05 010383 A (TOYODA GOSEI CO LTD; others: 02), 19. Januar 1993 (1993-01-19)
- PATENT ABSTRACTS OF JAPAN Bd. 016, Nr. 450 (M-1312), 18. September 1992 (1992-09-18) & JP 04 157229 A (KINUGAWA RUBBER IND CO LTD), 29. Mai 1992 (1992-05-29)
- PATENT ABSTRACTS OF JAPAN Bd. 012, Nr. 031 (M-663), 29. Januar 1988 (1988-01-29) -& JP 62 184250 A (MARUGO RUBBER KOGYO KK), 12. August 1987 (1987-08-12)

## Beschreibung

Die Erfindung betrifft ein Hydrolager mit einer durch eine elastische Tragfeder begrenzten, flüssigkeitsgefüllten Arbeitskammer, die in einem Lagergehäuse durch eine Zwischenwand von einem Ausgleichsraum getrennt ist, wobei die Arbeitskammer und der Ausgleichsraum über einen oder mehrere Verbindungskanäle hydraulisch verbunden sind, von denen wenigstens einer in mehreren Windungen verläuft und in einem die überwiegende Kanallänge bildenden, regelmäßige Kanalhauptteil durch sich regelmäßig in identischer oder ähnlicher geometrischer Form wiederholende Kanalabschnitte gebildet wird, die in räumlich gleicher oder ähnlicher Anordnung aneinander anschließen

Hydrolager sind in unterschiedlichen Ausführungsformen bekannt. Sie werden gegenwärtig fast ausschließlich in der Automobilindustrie zur Lagerung der Antriebsaggregate, insbesondere des Motors, eingesetzt. Dort bestehen überwiegend sehr ähnliche Anforderungen. Beispielsweise wird eine Motormasse von etwa 200 - 300 kg auf zwei Lagerpunkten abgestützt; die Dämpfungsabstimmung des Hydrolagers erfolgt auf etwa 8 - 15 Hz. Diese Anforderungen werden von Hydrolagern erfüllt, deren Verbindungskanäle aus weniger als einer vollständigen Windung bis zu drei Windungen am Umfang des Hydrolagergehäuses bestehen. Diese Verbindungskanäle werden unter besonderer Berücksichtigung der in der Automobilindustrie geltenden Anforderungen (hohe Stückzahl, geringer Bauraumbedarf, geringes Gewicht) gestaltet.

Bei der überwiegenden Anzahl dieser Hydrolager weisen alle Windungen oder zumindest die die Windungen bildenden Bauteile eine unterschiedliche Gestaltung und/oder Anordnung auf. Sie unterscheiden sich durch das Vorhandensein einer Einlassöffnung oder einer Auslassöffnung beziehungsweise durch die radial unterschiedliche Anordnung oder die Querschnittsform der Windungen des Verbindungskanals.

Die Anpassung der für den Automobilbereich bestimmten Hydrolager an die jeweiligen Anwendungsbedingungen erfolgt ausschließlich durch die Formgebung der die Verbindungskanäle bildenden Bauteile. Eine Justierung beziehungsweise Nachbearbeitung von Bauteilen im Rahmen des Montageprozesses zur Abstimmung der Lagereigenschaften auf den jeweiligen Anwendungsfall ist nicht vorgesehen.

Bei einem bekannten Hydrolager (EP 0 307 741 B1) besteht der Verbindungskanal aus zwei Windungen, die von zwei gleich gestalteten, jeweils einen Boden aufweisenden Ringen gebildet werden, die so aufeinander gelegt werden, dass der Boden des unteren Rings oben liegt und der Boden des oberen Ringes unten liegt. Eine Verlängerung des Verbindungskanals zur Anpassung an andere Betriebserfordernisse durch Hinzufügen eines oder mehrerer Ringe eines Rings ist nicht möglich.

Alle bekannten Hydrolager weisen eine vorgegebene, begrenzte Kanallänge auf und sind daher auch hinsichtlich der vorzugebenden Dämpfungseigenschaften eingeschränkt. Insbesondere die Erweiterung auf längere, vor allem über drei Windungen hinausgehende Verbindungskanäle, wie sie für neue Anwendungsfälle (z.B. Lagerung von Führerhauskabinen oder Aggregaten von Land- und Baumaschinen mit Gewichten von 400 - 1200 kg und einer Abstimmung des Hydrolagers auf 5 bis 15 Hz) erforderlich sein können, ist mit den bekannten Bauweisen nicht möglich.

Bei einem bekannten Hydrolager (JP 05 010 383 A) besteht der Verbindungskanal aus einer gewendelten Rohrleitung. Eine Anpassung an unterschiedliche Betriebserfordernisse ist hierbei nicht oder nur durch aufwändige Längenänderung der Rohrleitung möglich.

Bei einem anderen bekannten Hydrolager der eingangs genannten Gattung (JP 04 157229 A) wird der Kanalhauptteil durch einen Formkörper gebildet, der eine innere zylindrische Wand aufweist, an deren Außenseite ein gewendelter Steg angeordnet ist, der zusammen mit einer umgebenden zylindrischen Hülse den Verbindungskanal mit gleichmäßig gewendeltem Verlauf bildet. Das Formteil ist verhältnismäßig schwer herzustellen, weil es nicht in einem zweiteiligen Formwerkzeug, beispielsweise einem Spritzgiesswerkzeug hergestellt werden kann.

Aufgabe der Erfindung ist es daher, ein Hydrolager zu schaffen, das kostengünstig herzustellen und einfach zu montieren ist und insbesondere unter Beibehaltung seines grundsätzlichen konstruktiven Aufbaus eine Veränderung und Anpassung der Kanallänge mit einfachen Maßnahmen auch noch im Rahmen des Montageprozesses ermöglicht.

Diese Aufgabe wird durch ein Hydrolager gemäß dem Patentanspruch 1 gelöst Das Hydrolager weist eine durch eine elastische Tragfeder begrenzte, flüssigkeitsgefüllte Arbeitskammer auf, die in einem Lagergehäuse durch eine Zwischenwand von einem Ausgleichsraum getrennt ist, wobei die Arbeitskammer und der Ausgleichsraum über einen oder mehrere Verbindungskanäle hydraulisch verbunden sind, von denen zumindest einer in mehreren Windungen verläuft und in einem die überwiegende Kanallänge bildenden, regelmäßige Kanalhauptteil durch sich regelmäßig in identischer oder ähnlicher geometrischer Form wiederholende Kanalabschnitte gebildet wird, die in räumlich gleicher oder ähnlicher Anordnung aneinander anschließen.

Durch die Nutzung neuer Gestaltungselemente zur Ausbildung des Verbindungskanals lassen sich an die jeweiligen Betriebsanforderungen angepasste, insbesondere auch verhältnismäßig lange Verbindungskanäle mit einfachen Maßnahmen und geringem Kostenaufwand herstellen. Beliebig viele dieser Gestaltungselemente sind durch immer gleiche Verschiebung und Verdrehung aneinandergesetzt, wobei das (konstruktiv ausgeführte oder gedachte) Ende des einen Gestaltungselements an den (ebenfalls konstruktiv ausgeführten oder gedachten) Anfang des nächsten Elements anschließt.

Die Bereiche unterschiedlicher Steigung in jeder Windung des Kanalhauptteils ermöglichen eine für die Fertigung in einem zweiteiligen Formwerkzeug günstige Gestaltung.

Vorteilhafte Ausgestaltungen des Erfindungsgedankens sind Gegenstand weiterer Ansprüche.

Die Länge des Verbindungskanals, der durch die Windungen einer nach außen offenen gewendelten Nut eines Formteils und der daran anliegenden Wand einer Hülse gebildet wird, kann in fertigungstechnisch sehr einfacher Weise dadurch geändert werden, dass der Kanalkörper mindestens einen jeweils zum Innenraum des Kanalkörpers offenen Durchbruch aufweist.

Statt dessen ist es auch möglich, den Verbindungskanal aus Bauteilen aufzubauen, die jeweils eine oder mehrere Kanalwindungen und jeweils paarweise den Übergang zwischen diesen darstellen und zu beliebig langen Verbindungskanälen zusammengesetzt werden können. Vorzugsweise ist vorgesehen, dass die sich regelmäßig wiederholenden Kanalabschnitte durch jeweils identische, aufeinander gestapelte Kanalkörper gebildet werden.

Die Abstimmung der Verbindungskanäle, insbesondere hinsichtlich der Kanallänge und der Dämpfung der Kanalströmung, kann in unterschiedlicher Weise erfolgen. Ein den Verbindungskanal bildendes Rohr beziehungsweise Schlauch kann auf die gewünschte Kanallänge abgelängt werden. Beispielsweise bei Verwendung eines den Verbindungskanal bildenden Formteils kann eine Querbohrung oder ein Durchbruch mit angepasster Form und/oder Querschnittsfläche nach der gewünschten, anteiligen Kanallänge ausgeführt werden. Auch durch Austausch oder Hinzufügen beziehungsweise Weglassen von Bauteilen, die Kanalwindungen bilden, ist eine Abstimmung möglich.

Nachfolgend werden Ausführungsbeispiele der Erfindung näher erläutert, die in der Zeichnung dargestellt sind. Es zeigt:
Fig. 1 ein Hydrolager im Längsschnitt,
Fig. 2 in räumlicher Darstellungsweise den beim Hydrolager gemäß Fig. 1 verwendeten, den Verbindungskanal bildenden Kanalkörper,
Fig. 3 eine demgegenüber abgewandelte Ausführungsform eines Kanalkörpers,
Fig. 4 eine andere Ausführung eines Hydrolagers im Längsschnitt und
Fig. 5 - 13 in Teil-Querschnittsdarstellungen unterschiedliche Gestaltungen des Verbindungskanals.

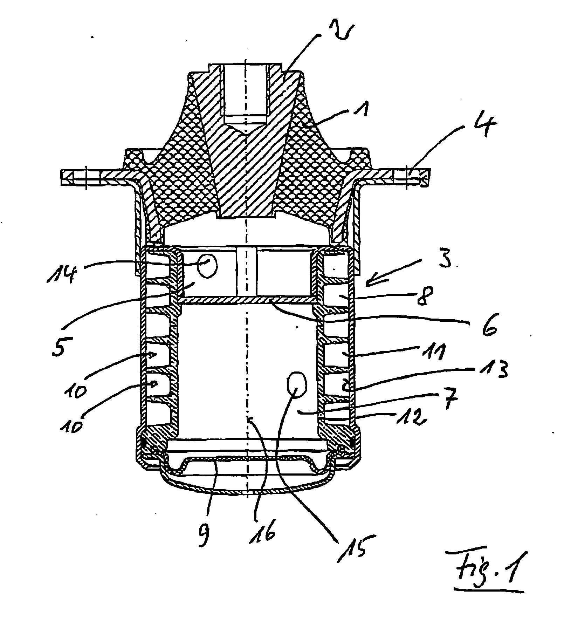

Das in Fig. 1 im Längsschnitt gezeigte Hydrolager, beispielsweise ein Kabinenlager für eine Land- oder Baumaschine, weist eine gummielastische Tragfeder 1 auf, auf der sich ein Lasteinleitungsteil 2 abstützt. Die Tragfeder 1 stützt sich an einem die Stützkraft aufnehmenden Lagergehäuse 3 ab, das mit Befestigungsflanschen 4 versehen ist. Im Lagergehäuse 3 ist eine flüssigkeitsgefüllte Arbeitskammer 5 durch die Tragfeder 4 abgeschlossen. Die Arbeitskammer 5 ist durch eine Zwischenwand 6 von einem Ausgleichsraum 7 im Lagergehäuse 3 getrennt. Die Arbeitskammer 5 ist mit dem Ausgleichsraum 7 über einen Verbindungskanal 8 hydraulisch verbunden, der in mehreren Windungen 10 verläuft. Der Ausgleichsraum 7 ist am Boden des Lagergehäuses 3 durch eine Membran 9 verschlossen.

Beim Ausführungsbeispiel gemäß Fig. 1 ist der Verbindungskanal 8 in seinem Kanalhauptteil gewendelt und besteht aus mehreren Kanalabschnitten, die jeweils eine Windung 10 bilden. Der Verbindungskanal 8 wird durch eine äußere Nut 11 eines Formteils oder Kanalkörpers 12 gebildet, die durch eine an der Außenseite des Kanalkörpers 12 anliegende Wand, vorzugsweise die Innenwand 13 des Lagergehäuses 3 begrenzt wird. Eine absolute Dichtheit ist hier nicht erforderlich; ein kleiner Spalt mit vergleichsweise hohem Strömungswiderstand relativ zu dem des Verbindungskanals an sich, reicht völlig aus und ist sogar hinsichtlich Herstellung und Montage (Toleranzen) vorteilhaft. Der Kanalkörper 12 weist eine zu seinem Innenraum und zur Arbeitskammer 5 offene Einlassöffnung und eine ebenfalls zum Innenraum des Kanalkörpers 12 offene, in den Ausgleichsraum 7 mündende Auslassöffnung auf. Zur Abstimmung kann mindestens ein jeweils zum Innenraum des Kanalkörpers 12 und zur Arbeitskammer 5 hin offener Durchbruch 14 und /oder ein zum Ausgleichsraum 7 hin offener Durchbruch 15 vorgesehen sein, die auch beim Montageprozess hergestellt werden können.

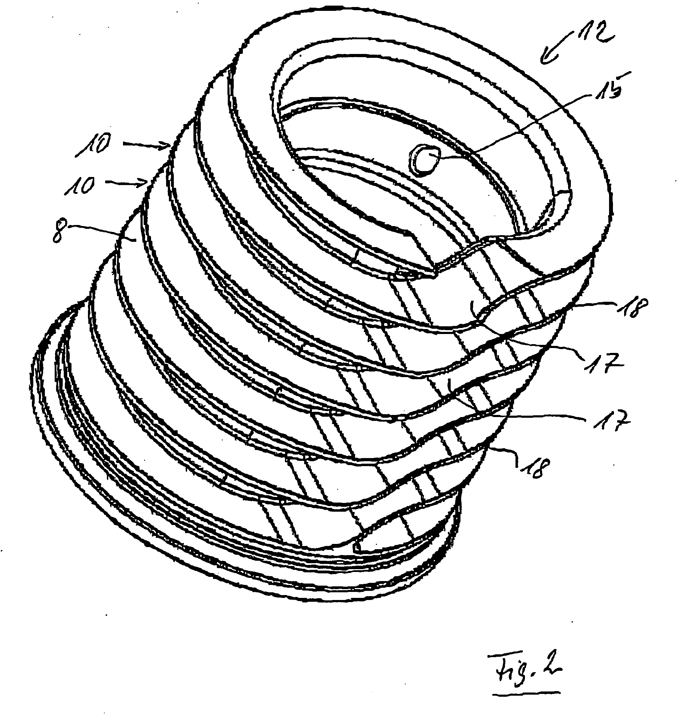

Wie man aus der Darstellung in Fig. 2 erkennt, weist der Verbindungskanal 8 im Kanalhauptteil in jeder Windung 10 Bereiche unterschiedlicher Steigung auf. Bei dem dargestellten, bevorzugten Ausführungsbeispiel ist jede Windung 10 des Verbindungskanals 8 über den überwiegenden Teil ihrer Länge ohne Steigung ausgeführt, das heißt sie liegt in einer Normalebene zur Längsachse 16 des Hydrolagers. In einem Übergangsbereich 17 weist jede Windung 10 eine positive Steigung auf, die den Übergang zur jeweils nächsten Windung 10 bildet. Mit dieser Gestaltung des Kanalkörpers 12 wird erreicht, dass der Kanalkörper 12 verhältnismäßig einfach als Formteil herzustellen ist, weil Hinferschneidungen der Formwerkzeuge vermieden werden. Des Weiteren lässt sich so zur Darstellung einer gegebenen Anzahl von Windungen Bauraum in axialer Richtung einsparen.

Der Verbindungskanal weist im Übergangsbereich 17 und in dem ohne Steigung ausgeführten übrigen Kanalabschnitt mindestens angenähert gleiche Querschnittsflächen auf. Dies kann beispielsweise dadurch erreicht werden, dass die Wanddicke der die benachbarten Kanalwindungen 10 voneinander trennenden Kanaltrennwände 18 im Übergangsbereich 17 geringer ist als in dem Kanalabschnitt ohne Steigung. Statt dessen oder zusätzlich zu dieser Maßnahme ist es auch möglich, den Kanalkörper 12 so zu gestalten, dass der Verbindungskanal 8 in den Obergangsbereichen 17 eine größere radial Ausdehnung aufweist als im Kanalabschnitt ohne Steigung.

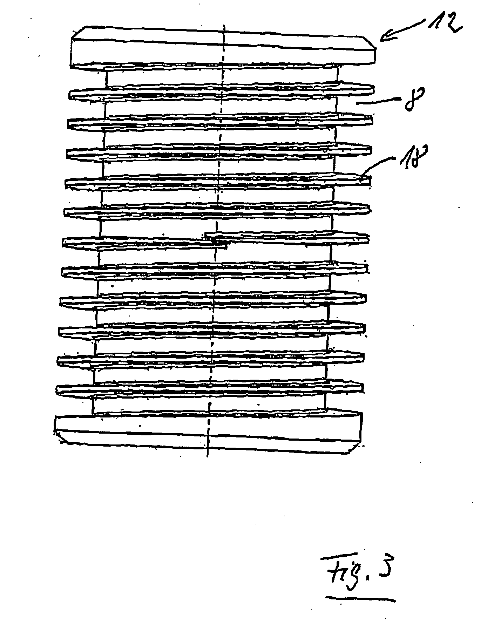

Eine abgewandelte Ausführungsform des Kanalkörpers 12 ist in Fig. 3 gezeigt. Er unterscheidet sich von dem Ausführungsbeispiel gemäß Fig. 2 im Wesentlichen dadurch, dass der Verbindungskanal 8 im Kanalhauptteil eine konstante Steigung aufweist. Die Trennwände 18 bilden hiermit eine gleichmäßig ansteigende Schraubenfläche. Das in Fig. 3 gezeigte Bauteil kann beispielsweise aus zwei gleichen Formkörpern zusammengesetzt sein, die sich in einer horizontalen Mittelebene berühren.

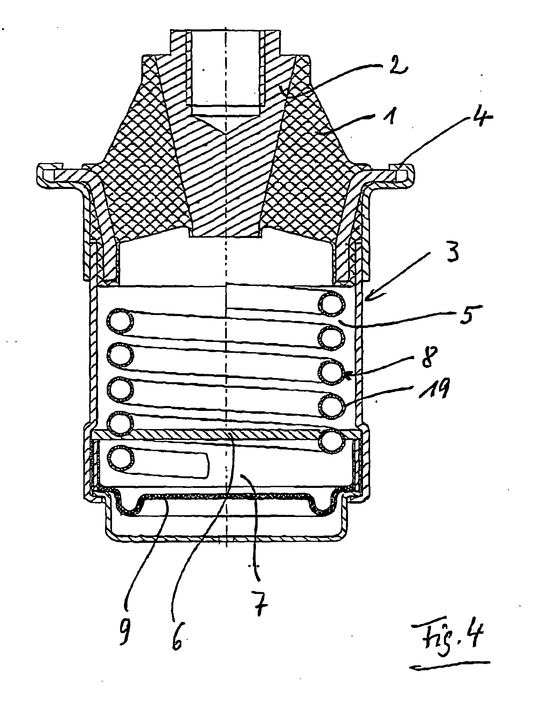

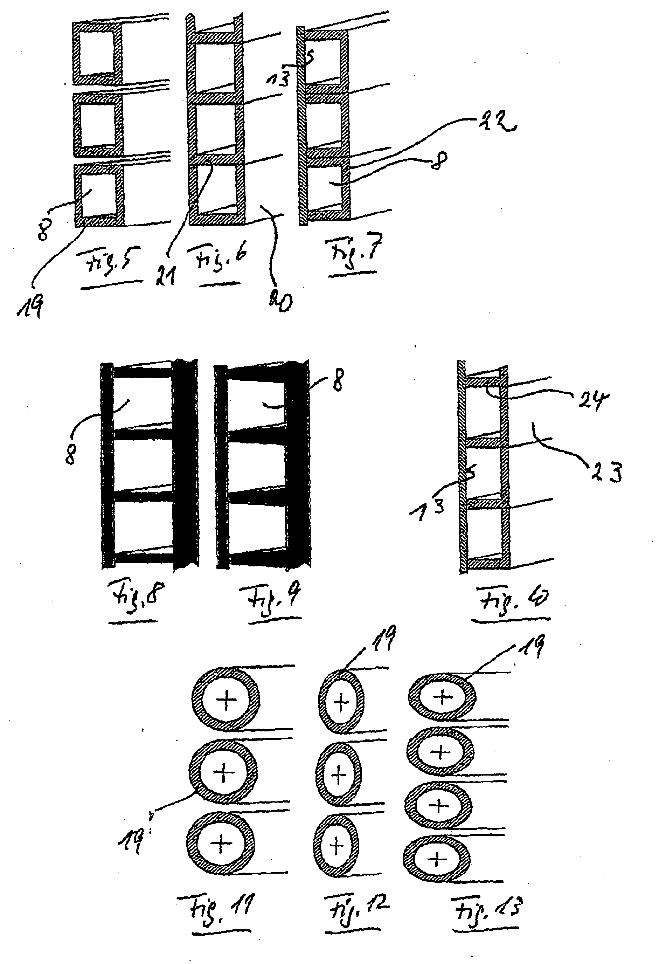

Das Ausführungsbeispiel gemäß Fig. 4 unterscheidet sich vom Ausführungsbeispiel nach Fig. 1 im Wesentlichen dadurch, dass der Verbindungskanal 8 in seinem Kanalhauptteil durch ein Hohlprofil gebildet wird, nämlich beim Beispiel nach Fig. 4 durch ein starres, gewendeltes Rohr 19, das in der Arbeitskammer 5 liegt und unterhalb der Trennwand 6 in den Ausgleichsraum 7 mündet. Statt dessen kann der Verbindungskanal 8 auch durch einen flexiblen Schlauch gebildet werden. Das Rohr 19 kann im Querschnitt kreisförmig (Fig. 11), elliptisch (Fig. 12, 13) oder rechteckig (Fig. 5) sein. Gleiche Querschnittsgestaltungen sind auch für einen flexiblen Schlauch möglich.

Der Verbindungskanal 8 kann durch Profile, beispielsweise aufeinander gestapelte Profilringe, gebildet werden, die nach einer oder zwei Seiten offen sind. So ist in Fig. 6 ein Profil 20 gezeigt, das nach oben zu einer benachbarten Profilwand 21 offen ist und dort anliegt. Beim Beispiel nach Fig. 7 ist ein den Verbindungskanal 8 bildendes Profil 22 zur Innenwand 13 des Lagergehäuses 3 oder zu einer anderen Bauteilwand offen und liegt dort an.

Fig. 10 zeigt Profile 23, die im Querschnitt L-förmig gestaltet sind und zur Innenwand 13 des Lagergehäuses 3 oder einer anderen Bauteilwand und zugleich zu einer benachbarten Profilwand 24 offen sind und dort anliegen.

Fig. 8 zeigt in einem Teilschnitt eine rechteckige Querschnittsgestaltung des Verbindungskanals 8. Fig. 9 zeigt eine trapezförmige Querschnittsgestaltung des Verbindungskanals 8.

Bei den in den Fig. 5 - 7 und 10 gezeigten Ausführungen werden die sich regelmäßig wiederholenden Kanalabschnitte durch jeweils identische, aufeinander gestapelte Kanalkörper gebildet, die dort als einzelne Profilringe ausgeführt sind. Statt dessen ist es auch möglich, in jedem der aufeinander gestapelten Kanalkörper mehrere Windungen vorzusehen.

## Patentansprüche

1. Hydrolager mit einer durch eine elastische Tragfeder (1) begrenzten, flüssigkeitsgefüllten Arbeitskammer (5), die in einem Lagergehäuse (3) durch eine Zwischenwand (6) von einem Ausgleichsraum (7) getrennt ist, wobei die Arbeitskammer (5) und der Ausgleichsraum (7) über einen oder mehrere Verbindungskanäle (8) hydraulisch verbunden sind, von denen wenigstens einer in mehreren Windungen (10) verläuft und in einem die überwiegende Kanallänge bildenden, regelmäßige Kanalhauptteil durch sich regelmäßig in identischer oder ähnlicher geometrischer Form wiederholende Kanalabschnitte gebildet wird, die in räumlich gleicher oder ähnlicher Anordnung aneinander anschließen, **dadurch gekennzeichnet, dass** der Verbindungskanal (8) im Kanalhauptteil in jeder Windung (10) Bereiche unterschiedlicher Steigung aufweist.

2. Hydrolager nach Anspruch 1, **dadurch gekennzeichnet, dass** die Kanalabschnitte jeweils eine Windung (10) des Verbindungskanals (8) bilden.

3. Hydrolager nach Anspruch 1 oder 2, **dadurch gekennzeichnet, dass** der Verbindungskanal (8) im Kanalhauptteil gewendelt ist.

4. Hydrolager nach Anspruch 3, **dadurch gekennzeichnet, dass** der Verbindungskanal (8) im Kanalhauptteil eine konstante Steigung aufweist.

5. Hydrolager nach Anspruch 1, **dadurch gekennzeichnet, dass** jede Windung (10) des Verbindungskanals (8) über den überwiegenden Teil ihrer Länge ohne Steigung ausgeführt ist und in einem Übergangsbereich (17) eine positive Steigung aufweist.

6. Hydrolager nach Anspruch 5, **dadurch gekennzeichnet, dass** der Verbindungskanal (8) im Übergangsbereich (17) und im Kanalabschnitt ohne Steigung mindestens angenähert gleiche Querschnittsflächen aufweist.

7. Hydrolager nach Anspruch 6, **dadurch gekennzeichnet, dass** die Wanddicke der die benachbarten Kanalwindungen (10) voneinander trennenden Kanaltrennwände (18) im Übergangsbereich (17) geringer ist als im Kanalabschnitt ohne Steigung.

8. Hydrolager nach Anspruch 6 oder 7, **dadurch gekennzeichnet, dass** der Verbindungskanal (8) in den Übergangsbereichen (17) eine größere radiale Ausdehnung aufweist als im Kanalabschnitt ohne Steigung.

9. Hydrolager nach Anspruch 1, **dadurch gekennzeichnet, dass** der Verbindungskanal (8) im Kanalhauptteil durch ein Hohlprofil (19) gebildet wird.

10. Hydrolager nach Anspruch 9, **dadurch gekennzeichnet, dass** der Verbindungskanal (8) im Kanalhauptteil aus einem starren Rohr (19) oder einem flexiblen Schlauch besteht, deren Querschnitte kreisförmig, elliptisch, rechteckig oder trapezförmig sind.

11. Hydrolager nach Anspruch 1, **dadurch gekennzeichnet, dass** der Verbindungskanal (8) durch ein Profil (20, 22, 23) gebildet wird, das zur Innenwand (13) des Lagergehäuses (3) und/oder einer Bauteilwand und/oder zu einer benachbarten Profilwand (21) offen ist und dort anliegt.

12. Hydrolager nach Anspruch 1, **dadurch gekennzeichnet, dass** der Verbindungskanal (8) durch eine äußere Nut (11) eines Kanalkörpers (12) gebildet wird, die durch ein an der Außenseite des Kanalkörpers (12) dicht anliegende Wand, vorzugsweise die Innenwand (13) des Lagergehäuses (3), begrenzt wird, und dass der Kanalkörper (12) mindestens einen jeweils zum Innenraum des Kanalkörpers (12) offenen Durchbruch (14, 15) aufweist.

13. Hydrolager nach Anspruch 1, **dadurch gekennzeichnet, dass** die sich regelmäßig wiederholenden Kanalabschnitte durch jeweils identische, aufeinander gestapelte Kanalkörper gebildet werden.

## Claims

1. Hydraulic bearing having a liquid-filled working chamber (5) which is delimited by an elastic carrying spring (1) and is separated from a compensating space (7) by an intermediate wall (6) in a bearing housing (3), the working chamber (5) and the compensating space (7) being connected hydraulically via one or more connecting channels (8), of which at least one extends in a plurality of turns (10) and is formed in a regular channel main part which forms the majority of the channel length by channel sections which are repeated regularly in an identical or similar geometric shape and adjoin one another in a spatially identical or similar arrangement, **characterized in that** the connecting channel (8) has regions of different pitch in every turn (10) in the channel main part.

2. Hydraulic bearing according to Claim 1, **characterized in that** the channel sections form in each case one turn (10) of the connecting channel (8).

3. Hydraulic bearing according to Claim 1 or 2, **characterized in that** the connecting channel (8) is helical in the channel main part.

4. Hydraulic bearing according to Claim 3, **characterized in that** the connecting channel (8) has a constant pitch in the channel main part.

5. Hydraulic bearing according to Claim 1, **characterized in that** each turn (10) of the connecting channel (8) is configured without pitch over the predominant part of its length and has a positive pitch in a transition region (17).

6. Hydraulic bearing according to Claim 5, **characterized in that** the connecting channel (8) has at least approximately identical cross-sectional surface areas in the transition region (17) and in the channel section without pitch.

7. Hydraulic bearing according to Claim 6, **characterized in that** the wall thickness of the channel dividing walls (18) which separate the adjacent channel turns (10) from one another is lower in the transition region (17) than in the channel section without pitch.

8. Hydraulic bearing according to Claim 6 or 7, **characterized in that** the connecting channel (8) has a greater radial extent in the transition regions (17) than in the channel section without pitch.

9. Hydraulic bearing according to Claim 1, **characterized in that** the connecting channel (8) is formed in the channel main part by a hollow profile (19).

10. Hydraulic bearing according to Claim 9, **characterized in that** the connecting channel (8) comprises, in the channel main part, a rigid pipe (19) or a flexible hose, the cross sections of which are circular, elliptical, rectangular or trapezoidal.

11. Hydraulic bearing according to Claim 1, **characterized in that** the connecting channel (8) is formed by a profile (20, 22, 23) which is open towards the inner wall (13) of the bearing housing (3) and/or a component wall and/or towards an adjacent profile wall (21) and bears against it there.

12. Hydraulic bearing according to Claim 1, **characterized in that** the connecting channel (8) is formed by an outer groove (11) of a channel element (12), which outer groove (11) is delimited by a wall which bears sealingly against the outer side of the channel element (12), preferably the inner wall (13) of the bearing housing (3), and **in that** the channel element (12) has at least one aperture (14, 15) which is open in each case towards the interior of the channel element (12).

13. Hydraulic bearing according to Claim 1, **characterized in that** the regularly repeating channel sections are formed by in each case identical channel elements which are stacked on one another.

## Revendications

1. Support hydraulique qui présente une chambre de travail (5) remplie de liquide, délimitée par un ressort élastique de support (1) et séparée d'une chambre d'équilibrage (7) dans un boîtier de support (3) par une paroi intermédiaire (6), la chambre de travail (5) et la chambre d'équilibrage (7) étant reliées hydrauliquement par un ou plusieurs canaux de liaison (8) dont au moins l'un s'étend en plusieurs spires (10) et est formé dans une partie principale de canal uniforme qui constitue la plus grande partie de la longueur du canal par des sections de canal qui se répètent uniformément sous une forme géométrique identique ou des formes géométriques similaires et qui se raccordent les unes aux autres dans un agencement spatialement identique ou des agencements spatiaux similaires,
**caractérisé en ce que**
dans sa partie principale, le canal de liaison (8) présente dans chaque spire (10) des parties de pentes différentes.

2. Support hydraulique selon la revendication 1, **caractérisé en ce que** chaque section de canal forme une spire (10) du canal de liaison (8).

3. Support hydraulique selon les revendications 1 ou 2, **caractérisé en ce que** le canal de liaison (8) est ondulé dans la partie principale du canal.

4. Support hydraulique selon la revendication 3, **caractérisé en ce que** le canal de liaison (8) présente une pente constante dans la partie principale du canal.

5. Support hydraulique selon la revendication 1, **caractérisé en ce que** chaque spire (10) du canal de liaison (8) ne présente pas de pente sur la partie principale de sa longueur et présente une pente positive dans une partie de transition (17).

6. Support hydraulique selon la revendication 5, **caractérisé en ce que** le canal de liaison (8) présente des sections transversales de superficie au moins sensiblement identique dans la partie de transition (17) et dans la partie de canal dépourvue de pente.

7. Support hydraulique selon la revendication 6, **caractérisé en ce que** l'épaisseur des parois (18) de séparation du canal qui séparent les uns des autres les enroulements voisins (10) du canal dans la partie de transition (17) est plus petite que dans la section du canal dépourvue de pente.

8. Support hydraulique selon les revendications 6 ou 7, **caractérisé en ce que** le canal de liaison (8) présente dans les parties de transition (17) une extension radiale plus importante que dans la section du canal dépourvu de pente.

9. Support hydraulique selon la revendication 1, **caractérisé en ce que** dans la partie principale du canal, le canal de liaison (8) est formé par un profilé creux (19).

10. Support hydraulique selon la revendication 9, **caractérisé en ce que** dans la partie principale du canal, le canal de liaison (8) est constitué d'un tube rigide (19) ou d'un tuyau flexible dont les sections transversales sont de forme circulaire, elliptique, rectangulaire ou trapézoïdale.

11. Support hydraulique selon la revendication 1, **caractérisé en ce que** le canal de liaison (8) est formé par un profilé (20, 22, 23) qui est ouvert sur la paroi intérieure (13) du boîtier (3) du support et/ou sur une paroi du composant et/ou sur une paroi voisine (21) du profilé et y repose.

12. Support hydraulique selon la revendication 1, **caractérisé en ce que** le canal de liaison (8) est formé par une rainure extérieure (11) ménagée dans un corps (12) de canal et délimitée par une paroi qui repose étroitement sur le côté extérieur du corps (12) du canal, de préférence la paroi intérieure (13) du boîtier (3) du support, et **en ce que** le corps (12) du canal présente au moins une perforation (14, 15) ouverte sur l'espace intérieur du corps (12) du canal.

13. Support hydraulique selon la revendication 1, **caractérisé en ce que** les sections de canal qui se répètent uniformément sont formées par des corps de canal identiques empilés les uns au-dessus des autres.
